# EUROPEAN PATENT APPLICATION

(11) **EP 4 848 363 A1**
(43) Date of publication of application: **02.12.2026**
(21) Application number: 26207374.5
(22) Date of filing: 24.09.2026
(51) Int. Cl.: H01M 4/36, H01M 4/62, H01M 4/525

(54) **POSITIVE ELECTRODE PLATE AND LITHIUM-ION SECONDARY BATTERY**

(30) Priority: 30.09.2025 CN 202511434203
(71) Applicant: Zhuhai CosMX Battery Co., Ltd., Zhuhai, Guangdong 519180 (CN)
(72) Inventor: QUAN, Xiaoqian, Zhuhai, Guangdong (CN); ZHONG, Ze, Zhuhai, Guangdong (CN); JIANG, Liwei, Zhuhai, Guangdong (CN)
(74) Representative: Bandpay & Greuter

(57) **Abstract**

The present application relates to the field of electrochemical devices, specifically to a positive electrode plate and a lithium-ion secondary battery. By using a first binder polymer with a cyano group and an ester group in a specific molar ratio and a first coating layer to synergistically protect lithium cobalt oxide particles, the cycling performance of the battery is significantly improved. On the one hand, the first coating layer, which is provided in a dot-like coating form, can absorb the lattice strain of the lithium cobalt oxide particles, reduce the internal stress peak value of the lithium cobalt oxide particles, and thus inhibit the initiation of intergranular or intragranular cracks of the lithium cobalt oxide particles. On the other hand, the presence of the first binder polymer with a cyano group and an ester group in a specific molar ratio can not only inhibit crack initiation and propagation and improve the adhesion of a positive electrode active material to a current collector, but also form a network structure with a suitable density, such that the occurrence of side reactions and heat generation caused by the presence of the first coating layer are avoided, thereby improving the cycling performance and thermal safety performance of the battery.

## Description

### TECHNICAL FIELD

The present application relates to the field of electrochemical devices, specifically to a positive electrode plate and a lithium-ion secondary battery.

### BACKGROUND

Lithium-ion batteries are widely used in consumer electronics, electric vehicles, and energy storage devices and other fields. With the gradual expansion of application market demand, lithium-ion batteries are facing new opportunities and challenges, developing towards higher energy density, higher rate performance, and longer cycle life. Consequently, new requirements are constantly being put forward for the safety performance of lithium-ion batteries.

In existing lithium-ion batteries, the commonly used binder for the positive electrode is PVDF (polyvinylidene fluoride), which has good film-forming properties and electrochemical stability during the battery manufacturing. However, on the one hand, the molecular structure of PVDF is not stable enough under a high voltage (usually the charging voltage of the battery being > 4.5 V). When operating at a higher voltage, PVDF will undergo slow chemical and electrochemical oxidation decomposition. The decomposition product thereof will react with trace amounts of water in the electrolyte to generate hydrogen fluoride (HF). HF will severely corrode the positive electrode active material, attack the surface of lithium cobalt oxide, destroy the crystal structure, and accelerate the crack propagation on the inner surface of lithium cobalt oxide, leading to "cobalt dissolution". On the other hand, PVDF mainly binds to a positive electrode active material through relatively weak van der Waals forces, and has mechanical properties and elasticity which are not ideal. It is prone to swelling in an electrolyte, which leads to poor adhesion of an active material to a current collector. During the long-term cycling of the battery, the positive electrode material will undergo continuous volume changes and lattice expansion and contraction. When the volume changes, the positive electrode material is more likely to break and fall off. PVDF cannot "hold" these broken parts, resulting in microscopic damage to the electrode structure, and causing a sharp decline in battery capacity and shortened cycle life.

### SUMMARY

The present application provides a positive electrode plate and a lithium-ion secondary battery, aiming to solve, to some extent, the problems of sharp decline in battery capacity and shortened cycle life of existing lithium-ion secondary batteries when operating at a higher voltage or during long-term cycling.

In a first aspect, the present application provides a positive electrode plate. The positive electrode plate includes a positive electrode current collector and a positive electrode active material layer on at least one side of the positive electrode current collector, where the positive electrode active material layer includes a positive electrode active material and a first binder polymer, the positive electrode active material includes a matrix and a first coating layer, and the first coating layer is provided on a surface of the matrix in a dot-like coating form;
the matrix includes lithium cobalt oxide particles, which have cracks on surfaces thereof;
a thickness of the first coating layer is 50 nm-500 nm; the first coating layer includes one or more of element Ti, Zr, W, Al, La, Y, Mn, Co, Ni, Fe, Sr, Se, Mg, Sc and Ag;
and the first binder polymer includes a cyano group and an ester group, and the molar ratio of the cyano group to the ester group in the first binder polymer is 1-20 : 1.

In some embodiments, an XRD pattern of the first binder polymer exhibits a first characteristic diffraction peak at a 2θ of 16-18° and a second characteristic diffraction peak at a 2θ of 22-30°, a full width at half maximum w1 of the first characteristic diffraction peak is 1.2-3° and a full width at half maximum w2 of the second characteristic diffraction peak is 4.5-6.5°; and the first characteristic diffraction peak and the second characteristic diffraction peak satisfy one or both of the following A and B:
A. a peak intensity F1 of the first characteristic diffraction peak and a peak intensity F2 of the second characteristic diffraction peak satisfy the following relation: 1.3 ≤ F1/F2 ≤ 2.5, preferably 1.4 ≤ F1/F2 ≤ 2.0;
and B. a peak area S1 of the first characteristic diffraction peak and a peak area S2 of the second characteristic diffraction peak satisfy the following relations: 60% ≤ S1/(S1+S2) ≤ 90%, and 10% ≤ S2/(S1+S2) ≤ 40%.

In some embodiments, a cohesive force of the positive electrode active layer is 10 N/m-30 N/m.

In some embodiments, the positive electrode active material includes a second coating layer located between the matrix and the first coating layer, where the second coating layer has a thickness of 3 nm-40 nm, and the second coating layer includes a compound with a spinel structure, which has the following molecular formula: AB₂₋ₘCₘO₄, where 0 ≤ m < 0.01, A and B are each independently selected from one or more of Al, Mg, Ti, Co and Ni, and A is different from B, C is selected from one or more of Al, Mg, Ti, W, Nb, Mo, Te and Ce, and a coating area of the first coating layer accounts for 20%-98% of a total coverage area of the second coating layer.

In some embodiments, Tg of the first binder polymer is 50°C-100°C; preferably, the Tg of the first binder polymer is 60°C-90°C.

In some embodiments, a swelling rate of the first binder polymer is 50%-300%; preferably, the swelling rate of the first binder polymer is 80%-200%.

In some embodiments, the first binder polymer includes several monomer polymerization units including a first monomer and a second monomer.

The first monomer includes one or more of acrylonitrile, methyl acrylonitrile, ethyl acrylonitrile, propyl acrylonitrile, and methoxy acrylonitrile.

The second monomer includes at least one of methyl methacrylate, methyl acrylate, ethyl acrylate, propyl acrylate, butyl acrylate, cyclohexyl acrylate, lauryl acrylate, 2-ethylhexyl acrylate, 2-hydroxyethyl acrylate, 2-hydroxypropyl acrylate, ethyl methacrylate, butyl methacrylate, 2-ethylhexyl methacrylate, isobornyl methacrylate, lauryl methacrylate, 2-hydroxyethyl methacrylate and 2-hydroxypropyl methacrylate.

In a second aspect, the present application provides a battery including the positive electrode plate as described in any of the first aspect above, and further including a negative electrode plate, an electrolyte and a separator located between the positive electrode plate and the negative electrode plate, where the negative electrode plate includes a negative electrode current collector and a negative electrode active material layer located on at least one side of the negative electrode current collector.

The electrolyte includes 0.8 mol/L-1.2 mol/L of lithium hexafluorophosphate.

A mass content of fluorine element in a unit area of 1 µm × 1 µm within a cross-section of the positive electrode active material layer along a thickness direction is a, and a mass content of fluorine element in a unit area of 1 µm × 1 µm within a cross-section of the negative electrode active material layer along the thickness direction is b, and a and b satisfy the following relation: |a-b| < 5%.

In some embodiments, the lithium cobalt oxide particles of the positive electrode plate, obtained by disassembly of the battery after 800 cycles of 3C/0.5C charge and discharge at 45°C, have cracks having a depth of 0.5 µm-20 µm and a width of less than or equal to 0.15 µm.

In some embodiments, the positive electrode plate includes a first surface and a second surface arranged opposite to each other; and from the Mth fold at a head of the wound battery, the first surface of the positive electrode plate is provided with several recesses at intervals, where M is an integer greater than 2, and the second surface is provided with several protrusions corresponding to the recesses.

In some embodiments, M is 3 or 4.

In some embodiments, a depth of the recess is 1-30 µm.

In some embodiments, a width of the recess is 0.2 mm-8 mm.

In some embodiments, a spacing between adjacent recesses is 0.5 mm-10 mm.

In some embodiments, the negative electrode active material layer includes a negative electrode active material and a negative electrode binder, where the negative electrode binder includes a second granular binder and/or a third binder polymer.

In some embodiments, the second granular binder includes one of or a mixture of several of a granular styrene-butadiene rubber, a granular butadiene-nitrile rubber, a granular butadiene rubber, a granular modified styrene-butadiene rubber, granular polyacrylate, granular polyacrylamide, granular polyacrylonitrile, a granular aqueous polyacrylonitrile copolymer and granular polyacrylate.

In some embodiments, the negative electrode active material includes a silicon-based material.

In some embodiments, the third binder polymer includes a cyano group and an ester group, and the molar ratio of the cyano group to the ester group in the third binder polymer is 1-20 : 1.

In some embodiments, under a field of view of a scanning electron microscope at a magnification of 10,000×, the number of the second binder particles in the negative electrode active material layer is 3 to 300 per unit area of 1 µm × 1 µm.

In some embodiments, the separator includes a base film and a first coating provided on a surface of at least one side of the base film, where the first coating includes ester group-containing polymer particles and fluorine-containing polymer particles.

In some embodiments, the first coating is located between the base film and the positive electrode, and an area of the first coating remaining on a surface of the positive electrode plate after disassembly of the battery is 30%-90% of a total area of a side of the positive electrode active material layer.

In some embodiments, the separator further includes a second coating, which is located between the base film and the negative electrode and includes ester group-containing polymer particles.

In some embodiments, a particle size Dv50 of the ester group-containing polymer particles in the first coating is 0.5 µm-1 µm.

In some embodiments, a particle size Dv50 of secondary particles of the fluorine-containing polymer is 3 µm-18 µm.

In some embodiments, a mass ratio of the fluorine-containing polymer particles to the ester group-containing polymer particles in the first coating is 4-6 : 1. In some embodiments, a coverage rate of the ester group-containing polymer particles in the first coating on the surface of the base film is W, the coverage rate of the ester group-containing polymer particles in the second coating on the surface of the base film is N, and W and N satisfy the following relation: 0 ≤ N-W ≤ 15%.

The technical solution of the present application has the following advantages.

The present application provides a positive electrode plate. The positive electrode plate includes a positive electrode current collector and a positive electrode active material layer on at least one side of the positive electrode current collector, where the positive electrode active material layer includes a positive electrode active material and a first binder polymer, the positive electrode active material includes a matrix and a first coating layer, and the first coating layer is provided on the surface of the matrix in a dot-like coating form; the matrix includes lithium cobalt oxide particles, which have cracks on the surfaces thereof; the thickness of the first coating layer is 50 nm-500 nm; the first coating layer includes one or more of element Ti, Zr, W, Al, La, Y, Mn, Co, Ni, Fe, Sr, Se, Mg, Sc and Ag; and the first binder polymer includes a cyano group and an ester group, and the molar ratio of the cyano group to the ester group in the first binder polymer is 1-20 : 1. By using a first binder polymer with a cyano group and an ester group in a specific molar ratio and a first coating layer to synergistically protect lithium cobalt oxide particles, the cycling performance of the battery is significantly improved. On the one hand, the first coating layer, which is provided in a dot-like coating form, can absorb the lattice strain of the lithium cobalt oxide particles, reduce the internal stress peak value of the lithium cobalt oxide particles, and thus inhibit the initiation of intergranular or intragranular cracks of the lithium cobalt oxide particles. On the other hand, the presence of the first binder polymer with a cyano group and an ester group in a specific molar ratio can not only inhibit crack initiation and propagation and improve the adhesion of a positive electrode active material to a current collector, but also form a network structure with a suitable density, such that the occurrence of side reactions and heat generation caused by the presence of the first coating layer are avoided, thereby improving the cycling performance and thermal safety performance of the battery.

Additional aspects and advantages of the examples of the present application will be described and shown in part in the following descriptions, or will be explained by means of the implementation of the examples of the present application.

### BRIEF DESCRIPTION OF DRAWINGS

In order to illustrate the technical solutions in the particular embodiments of the present application or in the prior art more clearly, the accompanying drawings to be used in the description of the particular embodiments or the prior art will be briefly introduced below; obviously, the accompanying drawings in the following description show some of the embodiments of the present application, and those of ordinary skill in the art may still obtain other drawings from these accompanying drawings without creative effort.
FIG. 1 shows the EDS element distribution of a first binder polymer prepared in Example 1.
FIG. 2 shows the XRD pattern of a first binder polymer prepared in Example 3.
FIG. 3 shows the Fourier transform infrared spectrum of a first binder polymer.
FIG. 4 shows the DSC spectrum of a first binder polymer prepared in Example 2.

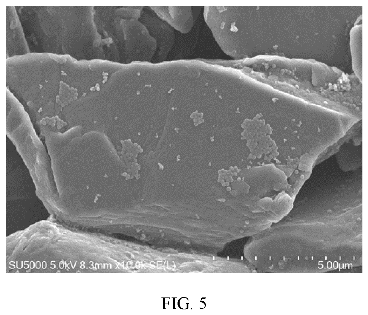

FIG. 5 shows the SEM image of a surface of a negative electrode plate prepared in Example 11.

### DESCRIPTION OF EMBODIMENTS

The following examples are provided for a better understanding of the present application, are not limited to the preferred embodiments, and do not limit the content and scope of protection of the present application, and any product that is identical or similar to the present application, derived from the inspiration of the present application or by combining the present application with other features of the prior art, falls within the scope of protection of the present application.

In the description of the present application, it should be noted that the orientation or positional relationships indicated by terms such as "inner" and "outer" are based on the orientation or positional relationships shown in the accompanying drawings and are merely for ease of description of the present application and simplification of the description, rather than indicating or implying that the devices or elements referred to must have a specific orientation or be constructed and operated in a described orientation, and therefore cannot be construed as limiting the present application. In addition, the terms "first", "second", and "third" are used for descriptive purposes only, and cannot be construed as indicating or implying relative importance.

The examples in which experimental steps or conditions are not specified are based on the operations of conventional experimental steps or conditions described in documents in the art. The reagents or instruments used without indicating a manufacturer are all commercially available conventional reagent products.

In addition, the technical features referred to in different embodiments of the present application described below can be combined with each other as long as they do not conflict with each other.

Currently, the commonly used binder PVDF is prone to chemical and electrochemical oxidation decomposition when operating at a high voltage. The decomposition product hydrolyzes to generate HF, which corrodes a positive electrode active material, attacks lithium cobalt oxide and accelerates the crack propagation on the inner surface of lithium cobalt oxide. In addition, the mechanical properties and elasticity of PVDF itself are not ideal, which leads to poor adhesion of an active material to a current collector. During long-term cycling, it cannot effectively inhibit the crack propagation on the inner surface of lithium cobalt oxide, resulting in a sharp decline in battery capacity and shortened cycle life.

The present application provides a positive electrode plate. The positive electrode plate includes a positive electrode current collector and a positive electrode active material layer on at least one side of the positive electrode current collector, where the positive electrode active material layer includes a positive electrode active material and a first binder polymer, the positive electrode active material includes a matrix and a first coating layer, and the first coating layer is provided on the surface of the matrix in a dot-like coating form; the matrix includes lithium cobalt oxide particles, which have cracks on the surfaces thereof; the thickness of the first coating layer is 50 nm-500 nm; the first coating layer includes one or more of element Ti, Zr, W, Al, La, Y, Mn, Co, Ni, Fe, Sr, Se, Mg, Sc and Ag; and the first binder polymer includes a cyano group and an ester group, and the molar ratio of the cyano group to the ester group in the first binder polymer is 1-20 : 1.

The moderate presence of cracks on the surface of lithium cobalt oxide particles can absorb and release the lattice strain of lithium cobalt oxide and increase the paths for lithium-ion migration, thereby improving the rate performance of the battery. However, when the cracks in lithium cobalt oxide further expand and intensify, it will cause a sharp decline in battery capacity and shortened cycle life, and increase the risk of thermal runaway.

In the present application, by modifying the surface of lithium cobalt oxide particles, the first coating layer, which is provided in a dot-like coating form, can absorb the lattice strain of lithium cobalt oxide particles, and reduce the peak stress inside the particles, thereby inhibiting the initiation of intergranular or intragranular cracks. The first coating layer forms a "cushion" when the electrode plate is rolled, which can buffer the micro-slippage between particles during cycling, reduce mechanical cracks caused by contact point mismatch, and thus improve the cycling performance of a positive electrode material. The first coating layer can also improve the blocking of the contact between the active material and the electrolyte, reducing side reactions and migration of cobalt ions.

However, the presence of the first coating layer will hinder the diffusion of lithium ions, increase the interface impedance, and lead to relatively large heat generation within the battery after multiple charge and discharge. The thermal expansion coefficient of the first coating layer does not match that of lithium cobalt oxide (LiCoO₂), and the volume changes during charging and discharging lead to stress accumulation, resulting in cracking or falling off of the first coating layer from the surface of active particles, making it impossible to effectively suppress the intensification of surface cracks and the initiation of intragranular cracks in lithium cobalt oxide.

To address the aforementioned issues, a first binder polymer is also used in the present application. The first binder polymer has a cyano group and an ester group. The cyano group has strong adsorption and passivation effects. On the one hand, the lone pair electrons of the nitrogen atom in the cyano group can form a coordination bond with the transition metal (Co) on the surface of the positive electrode active material LiCoO₂, which stabilizes the surface lattice structure of the cobalt-containing positive electrode active material, suppresses the phase transition and oxygen release of the positive electrode active material under a high voltage, enhances the interface bonding force between the first binder polymer and lithium cobalt oxide particles, and prevents crack propagation. On the other hand, during battery cycling, the cyano-containing binder reacts with the electrolyte to form a dense protective layer. The cyano group can also undergo weak solvation with Li⁺ in the electrolyte, stabilizing PF₆⁻, and blocking acidic substances such as HF in the electrolyte from corroding the positive electrode active material. This thereby reduces the generation of by-products and inhibits the crack propagation on the inner surface of lithium cobalt oxide, ensuring the structural integrity of the positive electrode active material. However, the cyano segment is relatively hard, so during battery cycling, the internal stress generated by the repeated lithium intercalation and deintercalation of the positive electrode material can easily cause the cyano segments to crack and fail, resulting in a decrease in the adhesion stability between positive electrode active material particles. Therefore, it is necessary to combine the cyano segments with ester functional groups with better flexibility. On the one hand, the ester group has hydrophobicity and good flexibility, forming a coating layer with a low surface energy on the surface of the positive electrode particles, and reducing the penetration of an acid, generated by side reactions of electrolyte solvent and trace water, into the internal interface of the positive electrode active material. On the other hand, the flexible segments of the ester group and the rigid segments of the cyano group form a soft-hard balance, giving the first binder polymer high ductility, and higher flexibility and elastic modulus; and the volumetric strain of the LiCoO₂ particles can be absorbed through deformation during charging and discharging, which alleviates the stress concentration, thereby inhibiting crack initiation and propagation, improving the adhesion of the active material to the current collector, and extending the cycle life of the battery. Furthermore, the carbonyl group (C=O) in the ester group can coordinate with Lewis acid sites (such as Co³⁺) on the surface of LiCoO₂ to form a stable chemisorption layer that covers the fresh surface exposed by cracks, which can inhibit the initiation of cracks on the exposed surface of lithium cobalt oxide particles, reduce direct contact with the electrolyte, and reduce the occurrence of side reactions and heat generation, thereby improving the cycling performance and thermal safety performance of the battery. Moreover, ester groups have a good affinity for electrolytes, making them easy to absorb, promoting ion transport, and improving the rate performance of the battery.

The cyano and ester groups in the first binder polymer jointly affect swelling. The ordered arrangement of cyano and ester groups can form a stable periodic network. Based on this periodic network, by controlling the molar ratio of the cyano group to the ester group in the first binder polymer to be 1-20 : 1, the network structure can have a suitable density, allowing the binder to swell appropriately in the electrolyte. Electrolyte molecules can penetrate into the binder polymer network, weakening the inter-chain forces. The polymer chains stretch and expand, which is beneficial for more cyano groups to be exposed at the interface between the binder polymer and the electrolyte, forming a stronger interaction (such as a hydrogen bond, and dipole-dipole interaction) with a metal oxide on the surface of the positive electrode active material, reducing the occurrence of side reactions and heat generation, and thereby improving the cycling performance of the battery. When the molar ratio of the cyano group to the ester group is too large (greater than 20 : 1), the first binder polymer will swell too little, which is not conducive to electrolyte penetration. The polymer chains cannot stretch, thus failing to protect the positive electrode and causing a decrease in cycling performance and oven performance. When the molar ratio of the cyano group to the ester group is too small (less than 1 : 1), the first binder polymer cannot form an orderly arranged periodic network. The strength/density of the physical cross-linking points of the periodic network is relatively reduced, the "pore size" of the network may increase, the chain segment mobility is enhanced, and excessive solvent penetration will cause the polymer to swell excessively, resulting in excessive extension of the binder polymer chain. The intermolecular forces (hydrogen bonds, and van der Waals forces) are shielded by the solvent, the bonding strength decreases, and thus the conductive network of the electrode plate deteriorates, making it impossible to maintain the structural stability of the positive electrode plate. When the molar ratio of the cyano group to the ester group is too large or too small, it will cause the first binder polymer to be too rigid or too flexible, which will deteriorate the structural stability of the positive electrode plate containing the binder and the interface stability between the positive electrode plate and the separator, and deteriorate the stability of the binder under a high voltage, thereby deteriorating the battery cycle. In summary, in the present application, the cycling performance of the battery is significantly improved by using a first binder polymer with a cyano group and an ester group in a specific molar ratio and a first coating layer to synergistically protect the lithium cobalt oxide particles. For example, the molar ratio of the cyano group to the ester group in the first binder polymer is 1 : 1, 2 : 1, 3 : 1, 5 : 1, 7 : 1, 9 : 1, 11 : 1, 13 : 1, 15 : 1, 20 : 1, or in a range of any two of the foregoing values. The thickness of the first coating layer is 50 nm, 60 nm, 70 nm, 90 nm, 120 nm, 150 nm, 200 nm, 250 nm, 300 nm, 350 nm, 400 nm, 450 nm, 500 nm, or in a range of any two of the foregoing values.

In one optional embodiment, the XRD pattern of the first binder polymer exhibits a first characteristic diffraction peak at a 2θ of 16-18° and a second characteristic diffraction peak at a 2θ of 22-30°, the full width at half maximum w1 of the first characteristic diffraction peak is 1.2-3° and the full width at half maximum w2 of the second characteristic diffraction peak is 4.5-6.5°. For example, w1 may be 1.2°, 1.5°, 1.8°, 2°, 2.5°, 2.8°, 3°, or in a range of any two of the foregoing values. w2 may be 4.5°, 5°, 5.2°, 5.5°, 6°, 6.5°, or in a range of any two of the foregoing values.

In one optional embodiment, the peak intensity F1 of the first characteristic diffraction peak and the peak intensity F2 of the second characteristic diffraction peak satisfy the following relation: 1.3 ≤ F1/F2 ≤ 2.5, preferably 1.4 ≤ F1/F2 ≤ 2.0. For example, F1/F2 may be 1.3, 1.4, 1.5, 1.6, 1.7, 1.8, 1.9, 2, 2.2, 2.4, 2.5 or in a range of any two of the foregoing values.

In one optional embodiment, the peak area S1 of the first characteristic diffraction peak and the peak area S2 of the second characteristic diffraction peak satisfy the following relations: 60% ≤ S1/(S1+S2) ≤ 90%, and 10% ≤ S2/(S1+S2) ≤ 40%. For example, S1/(S1+S2) may be 60%, 65%, 70%, 75%, 80%, 85%, 90%, or in a range of any two of the foregoing values. S2/(S1+S2) may be 10%, 15%, 20%, 25%, 30%, 35%, 40%, or in a range of any two of the foregoing values.

The first characteristic diffraction peak is a sharp peak, and the second characteristic diffraction peak is a Mantou peak. The first characteristic diffraction peak represents a cyano group, and the second characteristic diffraction peak represents an ester group. When the cyano group and the ester group are orderly arranged, a stable periodic network can be formed. Based on this periodic network, by controlling F1/F2 to be in the range of 1.3-2 (preferably, in the range of 1.4-1.9) and/or controlling S1/(S1+S2) and S2/(S1+S2) to be in the above ranges, it is beneficial for the binder to undergo appropriate swelling in the electrolyte, achieving the effective control of the balance between the orderliness, rigidity and flexibility of the periodic network of the binder, and forming an ordered periodic network. The swollen periodic network can form "high-speed ion channels" with channel pore sizes that can precisely accommodate Li⁺ solvation shell, reducing the migration energy barrier of Li⁺, reducing the occurrence of side reactions and the heat generation, and thereby improving the cycling performance and thermal safety performance of the battery.

In one optional embodiment, the positive electrode active material includes a second coating layer located between the matrix and the first coating layer, where the second coating layer has a thickness of 3 nm-40 nm, and the second coating layer includes a compound with a spinel structure, which has the following molecular formula: AB₂₋ₘCₘO₄, where 0 ≤ m < 0.01, A and B are each independently selected from one or more of Al, Mg, Ti, Co and Ni, and A is different from B, C is selected from one or more of Al, Mg, Ti, W, Nb, Mo, Te and Ce, and the coating area of the first coating layer accounts for 20%-98% of the total coverage area of the second coating layer. After the compound with a spinel structure is coated on the surface of the positive electrode material, the compound can alleviate the stability of the surface and interface structures of the positive electrode material during high-voltage cycling, reduce the formation of microcracks, and further improve the cycling performance and thermal safety performance of the positive electrode material. For example, m may be 0, 0.001, 0.003, 0.005, 0.006, 0.007, 0.008, 0.009, or in a range of any two of the foregoing values. For example, the percentage of the coating area of the first coating layer relative to the total coverage area of the second coating layer is 20%, 30%, 40%, 50%, 60%, 70%, 80%, 85%, 90%, 98%, or in a range of any two of the foregoing values.

In one optional embodiment, the Tg (glass transition temperature) of the first binder polymer is 50°C-100°C; preferably, the Tg of the first binder polymer is 60°C-90°C. When the Tg temperature is too high (greater than 100°C), the first binder polymer is in a rigid glassy state at room temperature, which will increase the brittleness and reduce the toughness of the electrode plate, increasing the risks of electrode plate cracking and powder shedding during rolling and cyclic expansion. When the temperature Tg is too low (below 50°C), the first binder polymer is more likely to soften, the contact between active materials deteriorates, and it cannot restrain the expansion of active material during expansion, increasing impedance. At the same time, it will cause the swelling degree of the first binder polymer to be large, and the conductive network to be discontinuous, affecting electron conduction, increasing impedance, deteriorating the kinetics of the positive electrode, and reducing the rate discharge performance of the battery. By controlling the Tg of the first binder polymer within the range of 50°C-100°C, especially within the range of 60°C-90°C, the thermal safety performance and rate performance of the battery can be balanced, allowing the battery to better balance excellent thermal safety performance and rate performance. For example, the Tg of the first binder polymer may be 50°C, 60°C, 70°C, 80°C, 90°C, 100°C, or in a range of any two of the foregoing values.

In one optional embodiment, the swelling rate of the first binder polymer is 50%-300%; preferably, the swelling rate of the first binder polymer is 80%-200%. By controlling the swelling rate of the first binder polymer within the range of 50%-300%, especially within the range of 80%-200%, it is beneficial for more cyano groups to be exposed at the interface between the binder polymer and the electrolyte, forming a stronger interaction (such as hydrogen bond and dipole-dipole interaction) with a metal oxide on the surface of the positive electrode active material, better reducing the occurrence of side reactions and heat generation, and further improving the thermal safety performance and rate performance of the battery. For example, the swelling rate of the first binder polymer is 50%, 60%, 70%, 80%, 90%, 100%, 110%, 120%, 130%, 140%, 150%, 160%, 170%, 180%, 190%, 200%, 250%, 300%, or in a range of any two of the foregoing values.

In one optional embodiment, the first binder polymer of the present application is a fluorine-free binder, which avoids the fluorine release reaction when conventional PVDF is used as a binder (polyvinylidene fluoride), reduces the formation of HF in the battery from the source, and inhibits the dissolution of Co in the positive electrode and the damage of HF to the positive electrode material.

In one optional embodiment, the mass content of the first binder polymer is 0.1%-3% based on the mass of the positive electrode active layer. Within a given range, the first binder polymer can coat the positive electrode active material particles, effectively inhibiting cobalt dissolution. If the amount of the first binder polymer added is too small, the bonding strength of the binder will be insufficient, which may cause the positive electrode active material particles to fall off, resulting in poor contact between particles and breakage of the electron conduction network; the first binder polymer does not fully cover the positive electrode active material particles, and the electrolyte will directly corrode the defective areas, exacerbating cobalt dissolution. If the amount of the first binder polymer added is too large, the first binder polymer will cover too much of the surface of the positive electrode active material particles, thus hindering the conduction of lithium ions; the proportion of the positive electrode active material is reduced, which leads to a loss of energy density; and excessive first binder polymer adsorbs more electrolyte, increasing the risk of increased interfacial side reactions. For example, based on the mass of the positive electrode active layer, the mass content of the first binder polymer may be 0.1%, 0.2%, 0.5%, 0.8%, 1.0%, 1.3%, 1.5%, 1.8%, 2.0%, 2.3%, 2.5%, 2.7%, 3.0%, or in a range of any two of the foregoing values.

In one optional embodiment, the cohesive force of the positive electrode active layer is 10 N/m-30 N/m. When fully charged, lithium ions are deintercalated from the negative electrode and intercalated into the positive electrode material, causing the positive electrode material to expand in volume. If the cohesive force of the positive electrode active layer is relatively low, the material is prone to separation or cracking between particles during expansion, which makes it impossible for the electrode plate to fully recover its original thickness after discharge, resulting in a significant increase in the battery expansion rate. In the present application, by controlling the cohesive force of the positive electrode active layer within the range of 10 N/m-30 N/m, it can better resist the structural damage caused by volume changes, thereby reducing the battery expansion rate. For example, the cohesive force of the positive electrode active layer may be 10 N/m, 12 N/m, 15 N/m, 18 N/m, 20 N/m, 22 N/m, 25 N/m, 28 N/m, 30 N/m, or in a range of any two of the foregoing values.

In one optional embodiment, the monomers of the first binder polymer include a first monomer and a second monomer.

For example, the first monomer includes one or more of acrylonitrile, methyl acrylonitrile, ethyl acrylonitrile, propyl acrylonitrile, and methoxy acrylonitrile.

For example, the second monomer includes at least one of methyl methacrylate, methyl acrylate, ethyl acrylate, propyl acrylate, butyl acrylate, cyclohexyl acrylate, lauryl acrylate, 2-ethylhexyl acrylate, 2-hydroxyethyl acrylate, 2-hydroxypropyl acrylate, ethyl methacrylate, butyl methacrylate, 2-ethylhexyl methacrylate, isobornyl methacrylate, lauryl methacrylate, 2-hydroxyethyl methacrylate and 2-hydroxypropyl methacrylate.

Optionally, the number average molecular weight of the first binder polymer is 100,000-1,500,000.

In one optional embodiment, the preparation of the first binder polymer further includes a fifth monomer, which includes at least one of a monomer containing an acidic group, a monomer containing a basic group, and a halogen-containing monomer, for example, acrylic acid.

In one optional embodiment, the mass content of the first monomer is 15-85 wt%, based on the total mass of all monomers.

In one optional embodiment, the mass content of the second monomer is 15-85 wt%, based on the total mass of all monomers.

In one optional embodiment, the mass content of the fifth monomer is 1-10 wt% based on the total mass of all monomers.

In the second aspect, the present application provides a battery including the positive electrode plate as described in any of the first aspect, and further including a negative electrode plate, an electrolyte and a separator located between the positive electrode plate and the negative electrode plate, where the negative electrode plate includes a negative electrode current collector and a negative electrode active material layer located on at least one side of the negative electrode current collector.

In one optional embodiment, the electrolyte includes 0.8 mol/L-1.2 mol/L of lithium hexafluorophosphate. By controlling the content of lithium hexafluorophosphate within the range of 0.8 mol/L-1.2 mol/L, the thermal safety performance and rate performance of the battery can be balanced, allowing the battery to better balance excellent thermal safety performance and rate performance. For example, the concentration of lithium hexafluorophosphate in the electrolyte may be 0.8 mol/L, 0.9 mol/L, 1.0 mol/L, 1.1 mol/L, 1.2 mol/L, or in a range of any two of the foregoing values.

In one optional embodiment, the mass content of fluorine element in a unit area of 1 µm × 1 µm within the cross-section of the positive electrode active material layer along the thickness direction is a, and the mass content of fluorine element in a unit area of 1 µm × 1 µm within the cross-section of the negative electrode active material layer along the thickness direction is b, and a and b satisfy the following relation: |a-b| < 5%. Both the fluorine element in the positive electrode active material layer and the fluorine element in the negative electrode active material layer originate from the electrolyte. By controlling the difference in F content on the surfaces of the positive and negative electrodes within the aforementioned range, the proportions of LiF on the surfaces of the positive and negative electrodes can be ensured to be similar. Therefore, the overall thermal stability of the interfaces at the positive and negative electrodes tends to be consistent, thereby reducing the risk of thermal runaway occurring first on one side of the positive or negative electrode during an oven test and improving the oven pass rate of the battery. Moreover, with similar F content on the positive and negative electrodes, the difference in decomposition temperature at both interfaces is small when thermal runaway occurs, which delays the thermal chain reaction and improves the high-temperature thermal safety performance of the battery. If the LiF on one side is significantly less than that on the other side (for example, LiF in the SEI of the negative electrode is insufficient), the interface on that side will collapse first at a lower temperature, releasing active materials (such as alkyl lithium and oxygen) and triggering a chain reaction, and increasing the risk of thermal runaway. For example, |a-b| may be 0, 0.1%, 1%, 2%, 3%, 4%, 4.5%, 4.8%, 4.9%, or in a range of any two of the foregoing values.

In one optional embodiment, the positive electrode plate includes a first surface and a second surface arranged opposite to each other; from the Mth fold at the head of the wound battery, the first surface of the positive electrode plate is provided with several recesses at intervals, where M is an integer greater than 2, and the second surface is provided with several protrusions corresponding to the recesses. In the present application, a positive electrode plate having a first surface provided with several recesses at intervals and a second surface provided with several protrusions corresponding to the recesses is formed by using a positive electrode embossing technique. After coating both surfaces of the positive electrode current collector with an active material layer, the positive electrode plate is processed by a special roller to make one side concave and the other side convex. Embossing of the positive electrode plate can reduce the risk of plate breakage. During charging and discharging, the volume of the positive electrode active material will change, resulting in stress concentration inside the electrode plate. Embossing, by introducing a structured surface, can disperse stress concentration points and avoid the formation of local cracks, and improve the bending strength and toughness of the electrode plate, thus reducing the risk of breakage of the electrode plate during cycling. For example, M is 3 or 4. In the present application, the term "fold" is defined as a bending unit: one fold is a combination of one straight segment and one arc segment located after and connected to the foregoing straight segment. The Mth fold is a combination composed of the Mth straight segment and the Mth arc segment located after and connected to the Mth straight segment, from the head of the wound battery. The straight segment refers to a substantially flat segment of the electrode plate extending along the winding traveling direction of the wound assembly, and the arc segment refers to an arcuately bent segment of the electrode plate connected to the end of the foregoing straight segment along the winding traveling direction of the wound assembly.

In one optional embodiment, the lithium cobalt oxide particles of the positive electrode plate, obtained by disassembly of the battery after 800 cycles of 3C/0.5C charge and discharge at 45°C, have cracks having a depth of 0.5 µm-20 µm and a width of less than or equal to 0.15 µm. According to the foregoing, the increased surface cracks of lithium cobalt oxide particles in the positive electrode can lead to heat generation and increase the risk of battery thermal runaway. By controlling the depth and width of the cracks in the lithium cobalt oxide particles in the positive electrode plate obtained by disassembling the battery after 800 cycles of charge and discharge at 3C/0.5C at 45°C within the above range, the risk of thermal runaway can be reduced and the oven pass rate of the battery can be improved. For example, the depth of the crack may be 0.5 µm, 1µm, 2 µm, 3 µm, 5 µm, 7 µm, 10 µm, 12 µm, 15 µm, 18 µm, 20 µm, or in a range of any two of the foregoing values. The width of the crack may be 0.01 µm, 0.02 µm, 0.05 µm, 0.08 µm, 0.1 µm, 0.12 µm, 0.13 µm, 0.14 µm, 0.15 µm, or in a range of any two of the foregoing values.

In one optional embodiment, the depth of the recess is 1-30 µm. For example, the depth of the recess may be 1 µm, 2 µm, 3 µm, 5 µm, 8 µm, 10 µm, 15 µm, 20 µm, 25 µm, 30 µm, or in a range of any two of the foregoing values.

In one optional embodiment, the width of the recess is 0.2 mm-8 mm. For example, the width of the recess may be 0.2 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 8 mm, or in a range of any two of the foregoing values.

In one optional embodiment, the spacing between adjacent recesses is 0.5 mm-10 mm. For example, the spacing between the recesses may be 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 9 mm, 10 mm, or in a range of any two of the foregoing values.

In one optional embodiment, the negative electrode active material layer includes a negative electrode active material and a negative electrode binder, where the negative electrode binder includes a second granular binder and/or a third binder polymer.

In one optional embodiment, the second granular binder includes one of or a mixture of several of a granular styrene-butadiene rubber, a granular butadiene-nitrile rubber, a granular butadiene rubber, a granular modified styrene-butadiene rubber, granular polyacrylate, granular polyacrylamide, granular polyacrylonitrile, a granular aqueous polyacrylonitrile copolymer and granular polyacrylate.

By using a second granular binder (such as SBR (Styrene-Butadiene Rubber)), the peel strength between an active layer and a foil can be improved, thereby improving the battery impedance. Non-granular third binder polymers (such as fluorine-free binders) can improve the infiltration uniformity of the electrolyte to the negative electrode. The same type of binder and the same swelling of the positive and negative electrode active material layers on both sides of the separator can improve the uniformity of fluorine distribution in the positive and negative electrode active material layers on both sides, and reduce the difference in heat generation on both sides, thus achieving the effect of improving oven performance.

In one optional embodiment, the third binder polymer includes a cyano group and an ester group, and the molar ratio of the cyano group to the ester group in the third binder polymer is 1-20 : 1. The third binder polymer includes cyano and ester functional groups. On the one hand, the cyano group can anchor cobalt elements that migrate from the positive electrode active layer to the negative electrode active material layer during battery cycling, preventing them from entering the silicon-based material and damaging the SEI film on the surface of the negative electrode silicon-based material, and increasing the stability of the silicon-based material during battery cycling. On the other hand, ester groups have better adsorption properties for electrolytes, which can enhance the strength and stability of the SEI film on the surface of silicon-based materials, buffer the volume change of silicon-based materials during charging and discharging, and prevent the silicon-based materials from being damaged and the formed SEI film from breaking and exposing fresh interfaces. It can also enhance the infiltration uniformity of the electrolyte to the negative electrode active material and reduce the migration resistance of lithium ions on the surface of the negative electrode active material. The cyano and ester groups jointly affect swelling. The ordered arrangement of cyano and ester groups can form a stable periodic network. Based on this periodic network, by controlling the molar ratio of the cyano group to the ester group in the first binder polymer to be 1-20 : 1, the network structure can be adjusted to have a suitable density, allowing the binder to swell appropriately in the electrolyte. Electrolyte molecules can penetrate into the binder polymer network, weakening the inter-chain forces. The polymer chains stretch and expand, which is beneficial for more cyano groups to be exposed at the interface between the binder polymer and the electrolyte, forming a stronger interaction (such as a hydrogen bond, and dipole-dipole interaction) with a metal oxide on the surface of the positive electrode active material, reducing the occurrence of side reactions and heat generation, and thereby improving the cycling performance of the battery.

In one optional embodiment, the monomers of the third binder polymer include a third monomer and a fourth monomer.

The third monomer includes one or more of acrylonitrile, methyl acrylonitrile, ethyl acrylonitrile, propyl acrylonitrile, and methoxy acrylonitrile.

The fourth monomer includes at least one of methyl methacrylate, methyl acrylate, ethyl acrylate, propyl acrylate, butyl acrylate, cyclohexyl acrylate, lauryl acrylate, 2-ethylhexyl acrylate, 2-hydroxyethyl acrylate, 2-hydroxypropyl acrylate, ethyl methacrylate, butyl methacrylate, 2-ethylhexyl methacrylate, isobornyl methacrylate, lauryl methacrylate, 2-hydroxyethyl methacrylate and 2-hydroxypropyl methacrylate.

The number average molecular weight of the third binder polymer is 100,000-1,500,000.

In one optional embodiment, the preparation of the third binder polymer further includes a sixth monomer, which includes at least one of a monomer containing an acidic group, a monomer containing a basic group, and a halogen-containing monomer, for example, acrylic acid.

In one optional embodiment, the mass content of the third monomer is 15-85 wt%, based on the total mass of all monomers.

In one optional embodiment, the mass content of the fourth monomer is 15-85 wt%, based on the total mass of all monomers.

In one optional embodiment, the mass content of the sixth monomer is 1-10 wt% based on the total mass of all monomers.

In one optional embodiment, the mass content of the negative electrode binder is 1%-6% based on the mass of the negative electrode active material layer. For example, based on the mass of the negative electrode active material layer, the mass content of the third binder polymer is any one of 1%, 2.0%, 2.3%, 2.5%, 2.7%, 3.0%, 3.5%, 4.0%, 4.5%, 5.0% and 6.0%.

In one optional embodiment, the third binder polymer of the present application is a fluorine-free binder, which avoids the fluorine release reaction when conventional PVDF (polyvinylidene fluoride) is used as a binder, reduces the formation of an acidic environment in the battery from the source, and inhibits the dissolution of Co in the positive electrode and the damage to the negative electrode material caused by HF generated by fluorine in the fluorine-containing binder.

In one optional embodiment, the negative electrode active material includes a silicon-based material, which includes at least one of silicon-carbon composite materials and silicon-oxygen materials.

In one optional embodiment, the silicon-based material includes one or more of spherical silicon-based materials and blocky silicon-based materials. Blocky silicon-based materials may be irregular blocks, regular rectangular blocks, or square blocks. Spherical silicon-based materials suffer more uniform surface stress during expansion and have better mechanical stability, and an SEI (Solid Electrolyte Interphase) film formed by a contact reaction with the electrolyte is more uniform. Moreover, they can uniformly withstand the stress during electrode plate rolling, reducing damage to silicon-based materials caused by overpressure or stress concentration during electrode plate rolling and improving lithium intercalation capability. Therefore, spherical silicon-based materials are preferred.

In one optional embodiment, the negative electrode active material further includes graphite.

In one optional embodiment, the mass content of the silicon element is 20%-80% based on the total mass of the silicon-based material.

In one optional embodiment, the mass content of the silicon element is 1.5%-50% based on the total mass of the negative electrode active material layer.

In one optional embodiment, under a field of view of a scanning electron microscope at a magnification of 10,000×, the number of the second binder particles in the negative electrode active material layer is 3 to 300 per unit area of 1 µm × 1 µm. The second granular binder can improve the peel strength between the active layer and the foil. By controlling the number within the above range, the adhesion strengths between the negative electrode active material particles and between them and the current collector meet the requirements. It will not cause larger volume changes during charging and discharging, which would lead to falling off the current collector. Moreover, it can ensure the continuity of the conductive network between the negative electrode material particles, ensure the consistency of the electrochemical polarization internal resistance during the charging and discharging of the battery, and ensure the cycle stability and rate performance of the battery.

In one optional embodiment, the separator includes a base film and a first coating provided on the surface of at least one side of the base film, where the first coating includes ester group-containing polymer particles and fluorine-containing polymer particles. The ester groups included in the first coating can be similar to and compatible with the ester groups in the positive electrode. The C-F bonds of the fluorine-containing polymer in the first coating are highly electronegative, and the cyano groups in the positive electrode active layer have a strong electron-withdrawing ability. The two can adsorb each other, improving the interface performance between the separator and the positive electrode.

In one optional embodiment, the first coating is located between the base film and the positive electrode, and the area of the first coating remaining on the surface of the positive electrode plate after disassembly of the battery is 30%-90% of the total area of the side with the positive electrode active material layer. The percentage is relatively large, indicating that the positive electrode plate and the separator have a good bonding effect, which improves the interfacial properties of the positive electrode, separator and negative electrode and increases the ion transport efficiency. For example, the area of the first coating remaining on the surface of the positive electrode plate relative to the total area of the side with the positive electrode active material layer may be 30%, 40%, 50%, 60%, 70%, 80%, 90%, or in a range of any two of the foregoing values.

In one optional embodiment, the separator further includes a second coating, which is located between the base film and the negative electrode and includes ester group-containing polymer particles.

In one optional embodiment, the ester group-containing polymer particles in the first coating and/or the second coating independently include one or more of polymethyl methacrylate, polyethylhexyl acrylate, polybutyl acrylate, an acrylate-acrylonitrile copolymer, an acrylate-ethylene copolymer, an acrylate-acrylonitrile-ethylene copolymer, a styrene-acrylate monomer-acrylonitrile copolymer, a ethylhexyl acrylate-methyl methacrylate copolymer, a butyl acrylate-methyl methacrylate copolymer, a methyl acrylate-acrylic acid-N,N-dimethylacrylamide copolymer, a ethyl acrylate-acrylic acid-2-(diethylamino)ethyl acrylate copolymer, a ethyl acrylate-acrylic acid-N,N-diethylacrylamide copolymer, and a ethyl acrylate-acrylic acid-2-(diethylamino)ethyl acrylate.

In one optional embodiment, the fluorine-containing polymer particles include one or more of polyvinylidene fluoride, a vinylidene fluoride-hexafluoropropylene copolymer, a vinylidene fluoride-trichloroethylene copolymer, polytetrafluoroethylene or polyhexafluoropropylene.

In one optional embodiment, the first coating further includes first heat-resistant particles.

In one optional embodiment, the separator further includes a third coating located between the first coating and the base film, the third coating including second heat-resistant particles.

In one optional embodiment, the first heat-resistant particles and the second heat-resistant particles are independently selected from one or more of boehmite, alumina, barium sulfate, magnesium oxide, magnesium hydroxide, silicon dioxide, tin dioxide, titanium oxide, calcium oxide, zinc oxide, zirconium oxide, yttrium oxide, nickel oxide, cerium oxide, zirconium titanate, barium titanate, magnesium fluoride, 1,3,5-triazine-2,4,6-triamine, melamine cyanurate, melamine trithiocyanate, 4,6-dimethyl-2-phenylpyrimidine, uracil, cytosine, 2,4-dimercaptopyrimidine, and 2,4-dimercapto-5,6-diaminopyrimidine.

In one optional embodiment, the particle size Dv50 of the ester group-containing polymer particles in the first coating is 0.5 µm-1 µm.

In one optional embodiment, the particle size Dv50 of secondary particles of the fluorine-containing polymer is 3 µm-18 µm.

In one optional embodiment, the mass ratio of the fluorine-containing polymer particles to the ester group-containing polymer particles in the first coating is 4-6 : 1. For example, the mass ratio of the fluorine-containing polymer particles to the ester group-containing polymer particles in the first coating may be 4 : 1, 4.5 : 1, 5 : 1, 5.5 : 1, 6 : 1 or in a range of any two of the foregoing values.

In one optional embodiment, the coverage rate of the ester group-containing polymer particles in the first coating on the surface of the base film is W, the coverage rate of the ester group-containing polymer particles in the second coating on the surface of the base film is N, and W and N satisfy the following relation: 0 ≤ N-W ≤ 15%. By controlling the coverage rate of ester group-containing polymer particles in the second coating to be greater than or equal to the coverage rate of ester group-containing polymer particles in the first coating and controlling the difference in coverage rates between the two to be 15% or less, the interfacial performance of the electrode plates on both sides of the separator is similar, reducing the difference in decomposition temperature at the interface on both sides when thermal runaway occurs, delaying the thermal chain reaction, and further improving the oven performance of the battery. For example, N-W may be 0, 1%, 2%, 3%, 4%, 5%, 6%, 7%, 10%, 12%, 15%, or in a range of any two of the foregoing values.

The coverage rate of the ester group-containing polymer particles on the surface of the base film in the first coating refers to the percentage of the coating area of the ester group-containing polymer particles in the first coating relative to the total area of the surface of one side of the base film.

The coverage rate of the ester group-containing polymer particles on the surface of the base film in the second coating refers to the percentage of the coating area of the ester group-containing polymer particles in the second coating relative to the total area of the surface of one side of the base film.

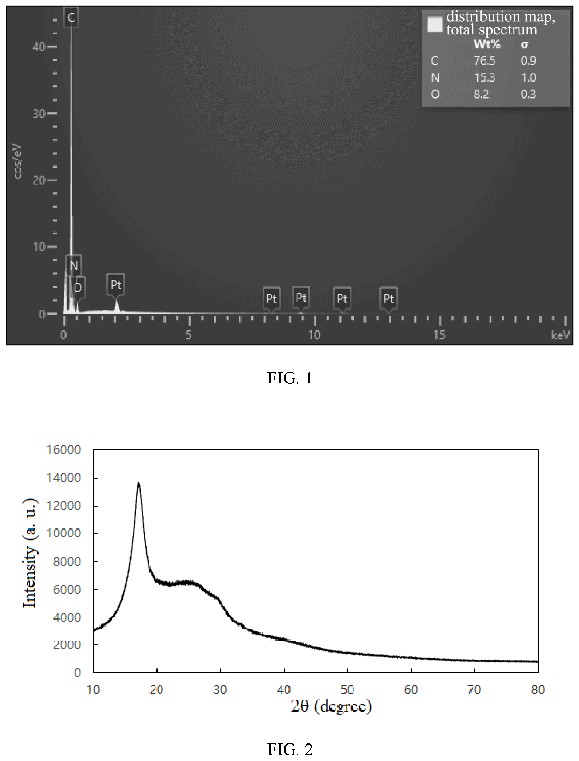

The test methods for the parameters involved in the present disclosure are as follows.
(1) XRD test:
   an X-ray diffraction (XRD) method is used, for example, Shimadzu XRD-6100 X-ray diffractometer is used for testing. A sample used for the test is 100 mg of a powder, which is uniformly ground and then evenly spread on a sample holder, Cu Kα radiation is used as the incident X-ray, the operating voltage of the X-ray source is 40 kV, the test power is 2 kW, 2θ (in °) is plotted on the horizontal coordinate and the signal intensity is recorded on the vertical coordinate, and the test range is 10-80°, with a scanning rate of 4°/min and a data collection interval of 0.02°, as shown in FIG. 2.
(2) F element content of the active layer at the cross-sections of positive and negative electrode plates

The battery is disassembled to obtain the positive and negative electrode plates. The cross-sections of the electrode plates are cut with an argon ion gas. A scanning electron microscopy coupled with energy dispersive spectroscopy is used to test the elemental distribution at 5 micrometers below the surface of the active material layer, ±2.5 micrometers in the middle, and 5 micrometers above the bottom surface. The mass fraction of the F element at different locations can be measured. Then, the absolute value of the difference between the mass content (denoted as a) of the fluorine element in a unit area of 1 µm×1 µm in the cross section of the positive electrode active material layer along the thickness direction and the mass content (b) of the fluorine element in a unit area of 1 µm×1 µm in the cross section of the negative electrode active material layer along the thickness direction is calculated, which gives |a-b|.

### (3) Energy dispersive X-ray spectroscopy (EDS) and infrared test

EDS analysis is performed on the powder of the first or third binder polymer to obtain the mass content of the nitrogen and oxygen elements, and then the molar ratio of the cyano group to the ester group is calculated (N comes from the cyano groups and O comes from ester groups), referring to FIG. 1.

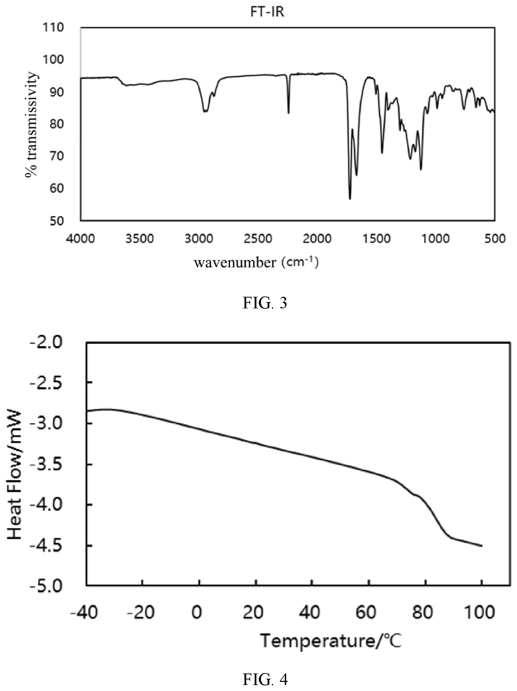

The first binder polymer powder is tested using a Fourier transform infrared spectrometer. Referring to FIG. 3, the characteristic peak of C-H is near 2900 cm⁻¹, the characteristic peak of the cyano group is near 2200 cm⁻¹, and the characteristic peak of the ester group is at 1700 cm⁻¹.

### (4) Swelling degree test

The first binder polymer is dissolved in NMP (N-methylpyrrolidone) to prepare a 5 wt% homogeneous solution; the solution is poured into a polytetrafluoroethylene mold, placed into an oven, and dried thoroughly at 60°C. the dried binder thin film is cut into small pieces of uniform size (3 cm×3 cm), weighed and recorded the weight as m1; the binder thin film sample is placed into a container containing an electrolyte (the electrolyte includes an organic solvent and a lithium salt, where the organic solvent is a mixture of propyl propionate, ethyl propionate, diethyl carbonate and ethylene carbonate at a volume ratio of 3 : 1 : 1 : 1; and the lithium salt is LiPF₆ at a concentration of 1 mol/L), the sample is completely submerged, and the container is sealed and placed into a thermostat (70°C). After soaking for 7 days, the binder thin film is removed from the container, and the excess electrolyte adhering to the surface of the thin film is removed with a filter paper. The binder thin film is weighed as m2; swelling degree = (m2-m1)/m1.

### (5) Tg test

A first binder polymer sample is taken for testing the Tg temperature using differential scanning calorimetry (DSC). Referring to FIG. 4, the Tg of the first binder polymer of Example 2 shows a baseline inflection with no obvious peak. The baseline inflection occurs near 75°C, whereby it is determined that the Tg of the binder used in the example is near 75°C.

### (6) Test method for the percentage of the area of the first coating remaining on the positive electrode plate and method for calculating the area

A finished battery is disassembled to select a flat location where the positive electrode plate and the separator are adhered, and a standard-sized strip sample is cut. A universal tensile testing machine is used, one side surface of the positive electrode plate is attached to a stainless steel plate with double-sided adhesive. The stainless steel plate with the sample attached to is fixed to the universal tensile testing machine, and then the separator is tightened and fixed to the tensile clamp of the universal tensile testing machine. A peeling speed is set to 50 mm/min, the "constant force control mode" is selected to control a constant tensile force of 15 N/m to peel the positive electrode plate and the separator until the separator is completely peeled off from the positive electrode plate. The residue of the first coating on the surface of the positive electrode plate is observed, the area is determined using an image analysis software, and the area percentage is calculated according to the following formula: the percentage of the area of the first coating remaining on the surface of the positive electrode plate after disassembly of the battery relative to the total area of the side with the positive electrode active material layer = (area of the first coating remaining on the surface of the positive electrode plate/ total area of the side with the positive electrode active material layer) × 100%.

### (7) Cohesive force test

A electrode plate is taken and cut into a standard size sample for later use. A double-sided adhesive tape is applied to the surface of a special steel plate for testing; next, the electrode plate sample to be tested is attached onto the double-sided adhesive tape and compacted with a pressure roller; a special adhesive tape for cohesive force testing is applied to the other side of the electrode plate and compacted with a pressure roller; and one end of the special adhesive tape for cohesive force testing is bent 180° in the opposite direction and tested using a high-speed tensile machine. One end of the steel plate is fixed to the lower clamp of the tensile testing machine, and the bent end of the adhesive tape is fixed to the upper clamp. The angle is adjusted to ensure that the upper and lower ends are in a vertical position. Then, it is stretched at a fixed speed until the surface coating is completely peeled off. The displacement and acting force during the process are recorded. The force when the force is balanced is taken as the bonding strength of the coating layer. The binding strength, i.e., cohesive force, is obtained by dividing this force by the adhesion length of the sample.

### (8) Coating layer thickness

The thickness of the coating layer can be obtained using a transmission electron microscopy.

### (9) The percentage of the coating area of the first coating layer relative to the total coverage area of the second coating layer (referred to as the coverage rate of the first coating layer)

The coverage area of the coating layer can be characterized by inductively coupled plasma on dot-like coating special elements, and the coating areas of the first and second coating layers can be calculated by using the brightness area presented by the special elements. Calculation: coating rate of the first coating layer = coverage area of the first coating layer / coverage area of the second coating layer × 100%.

### (10) Number of the second granular binder per unit area on the negative electrode surface

A battery is disassembled to obtain a fixed-size electrode plate, which is washed clean and dried. The electrode plate is magnified with a scanning electron microscope at a magnification of 10kx. A region with a unit area of 1 µm×1 µm is taken and the number of particles of the second granular binder in the region is counted. Three different regions are taken, the number of particles in each region is counted respectively and then the average value is calculated.

### (11) Molar ratio of the cyano group to the ester group in the first binder polymer

Samples are prepared using the first binder polymer. The sample surface is observed macroscopically using a scanning electron microscope at low magnification. Representative test areas are selected, and the electron beam is used for fine focusing to ensure clear imaging without significant drift. The energy spectrum detector is started and the area scanning mode is used to collect X-ray energy spectrum data of the target area. Alternatively, the energy spectrum detector is started and the point analysis mode or area scanning mode is used to collect X-ray energy spectrum data of the target area, and the elemental mass percentage (wt%) results are output. According to the mass percentage and atomic weight of each element, it is converted to atomic percentage (at%). The molar ratio of each element is then calculated based on the atomic percentage. The N element comes entirely from the cyano group, and the O element comes entirely from the ester group, thus obtaining the molar ratio of the cyano group to the ester group by conversion.

### (12) Coverage rate of ester group-containing polymer particles in the first coating on the surface of the base film

The surface of the first coating of the separator is magnified 1000x using a SEM (scanning electron microscope), and a 100 µm × 100 µm area is taken arbitrarily and divided into 400 uniform squares of 5 µm × 5 µm. The total number X of squares occupied by all particles in the first coating is calculated (note: when all particles occupy ≥ 50% of the square areas, it is considered to be occupied; otherwise, it is considered to be unoccupied). The coverage rate of all particles = X/400 × 100%. To increase the accuracy of the data, 5 points are randomly selected for area division calculation. The above operation is repeated 5 times and the average value is taken.

The surface of the first coating of the separator is magnified 1000x using a SEM (scanning electron microscope), and a 100 µm × 100 µm area is taken arbitrarily and divided into 400 uniform squares of 5 µm × 5 µm. The total number X of squares occupied by fluorine-containing polymer particles in the first coating is calculated (note: when the fluorine-containing polymer particles occupy ≥ 50% of the square areas, it is considered to be occupied; otherwise, it is considered unoccupied). The coverage rate of fluorine-containing polymer particles = X/400 × 100%. To increase the accuracy of the data, 5 points are randomly selected for area division calculation. The above operation is repeated 5 times and the average value is taken.

The coverage rate of ester group-containing polymer particles in the first coating on the surface of the base film (hereinafter referred to as "ester group-containing polymer particle coverage rate") is calculated according to the following formula: ester group-containing polymer particle coverage rate = all particle coverage rate - fluorine-containing polymer particle coverage rate.

### (13) Coverage rate of ester group-containing polymer particles in the second coating on the surface of the base film

The surface of the second coating of the separator is magnified 1000x using a SEM (scanning electron microscope), and a 100 µm × 100 µm area is taken arbitrarily and divided into 400 uniform squares of 5 µm × 5 µm. The total number X of squares occupied by ester group-containing polymer particles in the second coating is calculated (note: when the ester group-containing polymer particles occupy ≥ 50% of the square areas, it is considered to be occupied; otherwise, it is considered unoccupied). The coverage rate = X/400 × 100%. To increase the accuracy of the data, 5 points are randomly selected for area division calculation. The above operation is repeated 5 times, and the average value of is taken.

The present application will be further described in detail below with reference to specific examples, which cannot be construed as limiting the scope of protection of the present application. In all examples and comparative examples of the present application, the unit wt% represents the content percentage by mass.

### Example 1

This example provided a battery, a preparation method therefor was as follows.

### (1) Preparation of positive electrode plate

### 1) Preparation of lithium cobalt oxide positive electrode material:

(1) A compound with a spinel structure (molecular formula: Ni-Co_{1.995}W_{0.005}O₄), including 2% of the mass of the lithium cobalt oxide powder, was used as a coating precursor, and mixed with a lithium cobalt oxide powder (molecular formula: LiCoO₂) and uniformly ground until uniformly mixed, placed into a muffle furnace and calcined in air atmosphere at a calcination temperature 950°C for 12 h. The calcined product was then pulverized to obtain a positive electrode material coated with the compound with a spinel structure (NiCo_{1.995}W_{0.005}O₄), i.e. obtaining a positive electrode material with a second coating layer, the thickness of the second coating layer being 10 nm.
(2) aluminum hydroxide, including 1.5% of the mass of the lithium cobalt oxide powder, was used as a coating precursor, and mixed with the positive electrode material coated with the compound with a spinel structure (NiCo_{1.995}W_{0.005}O₄), and uniformly ground until uniformly mixed, placed into a muffle furnace and calcined in air atmosphere at a calcination temperature 800°C for 8 h. The calcined product was then pulverized to obtain a lithium cobalt oxide positive electrode material with a first coating layer and a second coating layer. The first coating layer had a thickness of 253 nm and a coating rate of 50%.

### 2) Preparation of positive electrode plate

The lithium cobalt oxide positive electrode material with a first coating layer and a second coating layer obtained in step 1), a first binder polymer and conductive carbon black were dispersed in N-methylpyrrolidone to obtain a uniform positive electrode active material slurry; in the positive electrode active material layer slurry, the solid components were included of 97.5 wt% of lithium cobalt oxide, 1 wt% of the first binder polymer and 1.5 wt% of the conductive carbon black. The positive electrode slurry was uniformly coated on both sides of an aluminum foil. The aluminum foil used had a thickness of 9 µm. The coated electrode plate was dried and rolled to obtain a rolled electrode plate. The thickness of the rolled electrode plate was 92 µm. The electrode plate was then embossed, slitted, and welded with a positive electrode tab to obtain a positive electrode plate. On the two opposite sides of the positive electrode plate, a recess was formed on one side and a protrusion was formed on the other side. The embossing started from the third fold at the head of the wound battery, and the depth of the recess was 20 µm; the width of the recess is 3 mm; the spacing between adjacent recesses was 3 mm, and the projections of the recesses and protrusions on the electrode plate were circular.

The first binder polymer was a copolymer of a first monomer and a second monomer. Based on the total mass of the monomers, the first monomer was acrylonitrile with a content of 71 wt%, and the second monomer was methyl acrylate with a content of 29 wt%.

The preparation method for the first binder polymer was as follows:
(1) 106 g of the acrylonitrile monomer, 43 g of the methyl acrylate monomer and 200 g of deionized water were added to a reaction kettle, and nitrogen was introduced and stirred at room temperature for 1 h (stirring speed: 300 rpm);
(2) the mixture was heated to 60°C, 1 g of an initiator (ammonium sulfate), 1 g of an emulsifier (sodium dodecyl sulfate), and 2 g of a buffer (sodium bicarbonate) were added, and polymerized for 24 h (stirring speed: 300 rpm); and
after the reaction was complete, the material was cooled to 25°C and then discharged. After centrifugation and filtration, a crude product was obtained. After further washing and drying, a binder polymer was obtained, which was in the form of a white powder. Referring to FIG. 2, the XRD pattern thereof exhibits a first characteristic diffraction peak at a 2θ of 16-18° and a second characteristic diffraction peak at a 2θ of 22-30°, the full width at half maximum w1 of the first characteristic diffraction peak is 1.2-3° and the full width at half maximum w2 of the second characteristic diffraction peak is 4.5-6.5°. The peak intensity relationship and peak area relationship of the first and second characteristic diffraction peaks are shown in Table 1.

### (2) Preparation of negative electrode plate

A negative electrode slurry was prepared by mixing and dispersing a silicon-based material (using a spherical silicon-carbon material which had a mass content of silicon element of 50% and a particle size Dv50 of 8 µm), a binder (a third binder polymer), a thickener (sodium carboxymethyl cellulose) and a conductive agent (conductive carbon black) in N-methylpyrrolidone; in the negative electrode slurry, the solid components were included of 10 wt% of the silicon-based material, 87 wt% of graphite, 0.5 wt% of single-walled carbon nanotubes, 0.5 wt% of the conductive carbon black, and 2 wt% of the third binder polymer. The negative electrode slurry was evenly coated on both sides of a copper foil. The thickness of the copper foil used was 6 µm. The coated electrode plate was dried and rolled to obtain a rolled electrode plate. The thickness of the rolled electrode plate was 80 µm. The electrode plate was then slitted and welded with a negative electrode tab to obtain a negative electrode plate.

The third binder polymer was a copolymer of a fourth monomer and a fifth monomer. Based on the total mass of the monomers, the fourth monomer was acrylonitrile with a content of 71 wt%, and the fifth monomer was methyl acrylate with a content of 29 wt%. The preparation method for the third binder polymer was the same as that of the first binder polymer.

### (3) Preparation of separator

Preparation of first coating: ester group-containing polymer particles (polymethyl methacrylate particles with a particle size Dv50 of 0.6 µm), fluorine-containing polymer particles (polyvinylidene fluoride particles with a particle size Dv50 of 0.8 µm), and deionized water were mixed to prepare a uniform slurry with a solid content of 55%. The mass ratio of the ester group-containing polymer particles to the fluorine-containing polymer particles was 15 : 75. The slurry was coated to one side of a base film (5 µm thick polyethylene base film) using a spraying method. The spraying flow rate was 16 ml/min and the spraying time was 2 s. After high-temperature baking, a first coating with a thickness of 2 µm was obtained.

Preparation of second coating: The ester group-containing polymer particles (polymethyl methacrylate particles with a particle size Dv50 of 0.6 µm) were mixed with deionized water according to a mass ratio of 55 wt% : 45 wt%; and after fully stirring and dispersing, the slurry was coated on the other side of the base film using a spraying method. The spraying flow rate was 15 ml/min and the spraying time was 2 s. Then, it was dried in a multi-section oven at 60°C to obtain a second coating with a thickness of 2 µm.

### (4) Preparation of lithium-ion battery

The prepared positive electrode plate, separator, and negative electrode plate were stacked sequentially and then wound into a jelly roll, which was then sealed with an aluminum-plastic film and baked under vacuum for 24 h to remove moisture. Then, a commercially available electrolyte was injected (the electrolyte including an organic solvent and a lithium salt, where the organic solvent was a mixture of propyl propionate, ethyl propionate, diethyl carbonate and ethylene carbonate, with a volume ratio of 3 : 1 : 1 : 1; and the lithium salt was LiPF₆ at a concentration of 1 mol/L). The battery was then subjected to formation, aging, vacuum sealing and sorting to obtain a soft-pack lithium-ion battery.

### Examples 2-5

The examples were substantially the same as Example 1, only except that the amounts of the first and second monomers were adjusted during the preparation of the positive electrode plate, resulting in a different molar ratio of the cyano group to the ester group, F1/F2, S1/(S1+S2), S2/(S1+S2), Tg, swelling rate, |a-b|, etc., as shown in Tables 1 and 2.

In Example 2, based on the total mass of monomers, the content of the first monomer (acrylonitrile) in the first binder polymer was 86 wt%, and the content of the second monomer (methyl acrylate) was 14 wt%.

In Example 3, based on the total mass of monomers, the content of the first monomer (acrylonitrile) in the first binder polymer was 90 wt%, and the content of the second monomer (methyl acrylate) was 10 wt%.

In Example 4, based on the total mass of monomers, the content of the first monomer (acrylonitrile) in the first binder polymer was 41 wt%, and the content of the second monomer (methyl acrylate) was 59 wt%.

In Example 5, based on the total mass of monomers, the content of the first monomer (acrylonitrile) in the first binder polymer was 92 wt%, and the content of the second monomer (methyl acrylate) was 8 wt%.

### Examples 6-7

The examples were substantially the same as Example 1, only except that the percentage of the mass of aluminum hydroxide relative to the mass of lithium cobalt oxide powder was changed during the preparation of the lithium cobalt oxide positive electrode material, resulting in a different thicknesses and coating rate of the first coating layer, as shown in Table 3.

In Example 6, the percentage of the mass of aluminum hydroxide relative to the mass of lithium cobalt oxide powder was 0.5 wt%.

In Example 7, the percentage of the mass of aluminum hydroxide relative to the mass of lithium cobalt oxide powder was 3 wt%.

### Examples 8-9

The examples were substantially the same as Example 1, only except that the calcination time in step (1) was changed, resulting in a different thickness of the second coating layer, as shown in Table 4. In Example 8, the calcination time was 6 h, and in Example 9, the calcination time was 25 h.

### Example 10

The example was substantially the same as Example 1, only except that the amounts of the fourth and fifth monomers were adjusted during the preparation of the negative electrode plate, resulting in a different molar ratio of the cyano group to the ester group in the third binder polymer and |a-b|, as shown in Table 2.

In Example 10, based on the total mass of monomers, the content of the fourth monomer (acrylonitrile) in the third binder polymer was 95 wt%, and the content of the fifth monomer (methyl acrylate) was 5 wt%.

### Examples 11-12

The examples were substantially the same as Example 1, only except that granular styrene-butadiene rubber was used instead of the third binder polymer during the preparation of the negative electrode plate, as shown in Table 2.

In Example 11, in the negative electrode slurry, the solid components were included of 10 wt% of a silicon-based material, 88 wt% of graphite, 0.5 wt% of single-walled carbon nanotubes, 0.5 wt% of conductive carbon black, and 1 wt% of granular styrene-butadiene rubber.

In Example 12, in the negative electrode slurry, the solid components were included of 10 wt% of a silicon-based material, 85 wt% of graphite, 0.5 wt% of single-walled carbon nanotubes, 0.5 wt% of conductive carbon black, and 6 wt% of granular styrene-butadiene rubber.

### Example 13

The example was substantially the same as Example 1, only except that a mixture of granular styrene-butadiene rubber and the third binder polymer at a mass ratio of 1 : 1 was used in place of the third binder polymer during the preparation of the negative electrode plate. The mixture accounted for 2 wt% of the mass of the solid components in the negative electrode slurry. The third binder polymer used in this example was from the same batch as the third binder polymer in Example 1, as shown in Table 2.

### Examples 14-17

The examples were substantially the same as Example 1, only except that during the preparation of the separator, by changing the spraying flow rate during the preparation of the first coating and/or the second coating, the coverage rate W of the ester group-containing polymer particles in the first coating on the surface of the base film and/or the coverage rate N of the ester group-containing polymer particles in the second coating on the surface of the base film was changed, resulting in different N-W, as shown in Table 4.

In Example 14, the spraying flow rate during the preparation of the first coating was adjusted to 14 ml/min.

In Example 15, the spraying flow rate during the preparation of the second coating was adjusted to 14 ml/min.

In Example 16, the spraying flow rate during the preparation of the first coating was adjusted to 18 ml/min.

In Example 17, the spraying flow rate during the preparation of the second coating was adjusted to 17 ml/min.

### Example 18

The example was substantially the same as Example 1, only except that the same mass of methacrylonitrile was used instead of acrylonitrile and the same mass of methyl methacrylate was used instead of methyl acrylate during the preparation of the first binder polymer.

### Comparative Examples 1-2

The comparative examples were substantially the same as Example 1, only except that the amounts of the first and second monomers were adjusted, resulting in a different molar ratio of the cyano group to the ester group, F1/F2, S1/(S1+S2), S2/(S1+S2), Tg, swelling rate, etc., as shown in Tables 1 and 2.

In Comparative Example 1, based on the total mass of monomers, the content of the first monomer (acrylonitrile) in the first binder polymer was 94.5 wt%, and the content of the second monomer (methyl acrylate) was 5.5 wt%.

In Comparative Example 2, based on the total mass of monomers, the content of the first monomer (acrylonitrile) in the first binder polymer was 38 wt%, and the content of the second monomer (methyl acrylate) was 62 wt%.

### Comparative Example 3

The comparative example was substantially the same as Example 1, only except that the preparation of the lithium cobalt oxide positive electrode material was different. In this comparative example, step (2) was omitted in the preparation method for the lithium cobalt oxide positive electrode material. In the preparation process of the positive electrode plate, the same mass of positive electrode material with a second coating layer was directly used instead of the lithium cobalt oxide positive electrode material used in Example 1.

**Table 1 Parameters of first binder polymer and positive electrode plate**

| Item | Molar ratio of cyano group to ester group in first binder polymer | F1/F2 | S1/(S1+S2) | S2/(S1+S2) | Tg (°C) | Swelling rate | Cohesive force (N/m) |
|---|---|---|---|---|---|---|---|
| Example 1 | 4 : 1 | 1.4 | 70% | 30% | 60 | 198% | 22 |
| Example 2 | 10 : 1 | 1.6 | 78% | 22% | 75 | 161% | 18 |
| Example 3 | 13 : 1 | 2 | 88% | 12% | 90 | 123% | 15 |
| Example 4 | 2 : 1.8 | 1.3 | 55% | 45% | 48 | 348% | 8 |
| Example 5 | 19 : 1 | 2.5 | 95% | 5% | 105 | 40% | 13 |
| Example 18 | 6: 1 | 1.5 | 73% | 27% | 65 | 180% | 20 |
| Comparative Example 1 | 30: 1 | 3.2 | 95% | 5% | 120 | 18% | 17 |
| Comparative Example 2 | 0.5 : 1 | 1.1 | 30% | 70% | 40 | 401% | 5 |

**Table 2 Parameters of positive and negative electrode plates**

| Item | Cyano group : ester group in first binder polymer | \|a-b\| | Cyano group : ester group in third binder polymer | Number of binders |
|---|---|---|---|---|
| Example 1 | 4 : 1 | 2.1% | 4 : 1 | / |
| Example 2 | 10 : 1 | 3.0% | 4 : 1 | / |
| Example 3 | 13 : 1 | 3.5% | 4 : 1 | / |
| Example 4 | 2 : 1.8 | 2.3% | 4 : 1 | / |
| Example 5 | 19 : 1 | 6.5% | 4 : 1 | / |
| Example 10 | 4 : 1 | 7.0% | 26 : 1 | / |
| Example 11 | 4 : 1 | 2.1% | / | 6 |
| Example 12 | 4: 1 | 2.1% | / | 151 |
| Example 13 | 4: 1 | 3.2% | 4 : 1 | 5 |
| Example 18 | 6: 1 | 3.2% | 4 : 1 | / |
| Comparative Example 1 | 30 : 1 | 7.8% | 4 : 1 | / |
| Comparative Example 2 | 0.5 : 1 | 3.3% | 4 : 1 | / |

**Table 3 Parameters of first coating layer**

| Item | Thickness / nm | Area percentage |
|---|---|---|
| Example 1 | 253 | 52% |
| Example 6 | 51 | 20% |
| Example 7 | 497 | 97% |
| Comparative Example 3 | / | / |

**Table 4 Parameters of second coating layer**

| Item | Thickness / nm |
|---|---|
| Example 1 | 10 |
| Example 8 | 3 |
| Example 9 | 39 |

**Table 5 Parameters of separator**

| Item | N | W | N-W |
|---|---|---|---|
| Example 1 | 70% | 61% | 9% |
| Example 14 | 60% | 60% | 0 |
| Example 15 | 69% | 54% | 15% |
| Example 16 | 79% | 60% | 19% |
| Example 17 | 67% | 69% | -2% |

In Tables 2 and 3, "/" indicates the absence.

### Test examples

### 1. Rate discharge test

The test was conducted at 25±5°C: A lithium-ion battery was left to stand at 25±5°C for 10 min, discharged at 0.2C to 3.0 V, left to stand for 10 min, charged at a constant current of 0.7C to 4.50 V, with a cutoff current of 0.05C, left to stand for 10 min, and discharged at 0.2C to 3.0 V; and the battery was then left to stand for 10 min. The discharge capacity at this point was Q0. Then the battery was charged at a constant current of 0.7C to 4.50 V, with a cutoff current of 0.05C, left to stand for 10 min, and then discharged at 1C to 3.0 V; the battery was then left to stand for 10 min; and at this point, the discharge capacity was Q1, and then the 1C rate performance = Q1/Q0 * 100%. Then the battery was charged at a constant current of 0.7C to 4.50 V, with a cutoff current of 0.05C, left to stand for 10 min, and discharged at 1.5C to 3.0 V; the battery was then left to stand for 10 min; then the battery was charged at a constant current of 0.7C to 4.50 V, then charged at the constant voltage until a cutoff current of 0.05C, left to stand for 10 min, and then discharged at 2C to 3.0 V; the battery was then left to stand for 10 min, then the battery was charged at a constant current of 0.7C to 4.50 V, then charged at the constant voltage until a cutoff current of 0.05C, left to stand for 10 min, and then discharged at 3C to 3.0 V; the battery was left to stand for 10 min; at this point, the discharge capacity was Q2. 3C rate performance = Q2/Q0 * 100%.

### 2. Oven test

A lithium-ion battery was left to stand for 10 min, discharged at 0.2C to 3.0 V, left to stand for 10 min, fully charged at 0.5C, cut off at 0.025C, left to stand for 10 min, and then placed in a thermal shock test chamber at 25°C. The temperature was increased to the target temperature (129°C) at a rate of 5°C±2°C/min and maintained for 60 min, observing whether the battery caught fire or exploded. A battery was considered to have passed if it did not catch fire or explode. Each group tested 10 batteries, and the test results were recorded as "number of batteries that passed / total number of batteries tested".

### 3. Cycling test

The finished batteries prepared were subjected to 3C/0.5C charge-discharge cycles at 45°C for 800 cycles to confirm the capacity retention rate and expansion rate of the battery. Capacity retention rate after 800 cycles = remaining capacity / initial capacity * 100%, thickness expansion rate = (final thickness - initial thickness) / initial thickness * 100%.

### 4. Crack depth and width

After 800 cycles of testing, the battery was disassembled, and electrodes of a fixed size were taken, washed clean, dried and mechanically polished to obtain a flat cross-section. The cross-section of the electrode plate was magnified using a scanning electron microscope to observe and measure the extension length of the crack in the cross-section, i.e., the crack depth. The surface of the electrode plate was magnified using a scanning electron microscope to observe and measure the crack width.

Please see Table 6 for the results of each test.

**Table 6 Electrical performance of lithium-ion secondary battery**

| | Capacity retention rate after 800 cycles | Expansion rate | 1C rate performance | 3C rate performance | 129°C oven performance | Crack depth (µm) | Crack width (µm) |
|---|---|---|---|---|---|---|---|
| Example 1 | 78.5% | 9.8% | 91.60% | 74.90% | 10 | 12.1 | 0.13 |
| Example 2 | 78.7% | 9.5% | 92.50% | 75.80% | 10 | 6.6 | 0.09 |
| Example 3 | 78.6% | 9.6% | 91.90% | 74.80% | 10 | 13.2 | 0.14 |
| Example 4 | 70.1% | 11.5% | 84.50% | 70.80% | 6 | 23.6 | 0.20 |
| Example 5 | 70.5% | 11.2% | 85.40% | 70.90% | 8 | 22.9 | 0.18 |
| Example 6 | 78.6% | 9.5% | 91.50% | 75.60% | 10 | 11.2 | 0.10 |
| Example 7 | 77.8% | 9.8% | 90.10% | 73.50% | 10 | 9.2 | 0.07 |
| Example 8 | 78.2% | 9.6% | 91.10% | 74.90% | 10 | 12.5 | 0.11 |
| Example 9 | 78.3% | 9.4% | 91.30% | 75.20% | 10 | 9.8 | 0.07 |
| Example 10 | 74.5% | 11.7% | 86.70% | 73.80% | 8 | 21.2 | 0.19 |
| Example 11 | 73.6% | 11.8% | 85.50% | 73.90% | 6 | 18.3 | 0.14 |
| Example 12 | 74.5% | 11.7% | 86.10% | 74.10% | 7 | 17.2 | 0.13 |
| Example 13 | 75.8% | 10.9% | 87.20% | 75.90% | 9 | 16.9 | 0.09 |
| Example 14 | 77.9% | 9.6% | 91.70% | 74.80% | 10 | 15.6 | 0.08 |
| Example 15 | 78.0% | 9.1% | 91.30% | 74.20% | 10 | 14.9 | 0.10 |
| Example 16 | 70.1% | 10.1% | 84.50% | 70.10% | 6 | 18.6 | 0.14 |
| Example 17 | 70.5% | 10.0% | 85.40% | 70.90% | 7 | 16.9 | 0.13 |
| Example 18 | 78.5% | 9.6% | 92.30% | 75.30% | 10 | 6.2 | 0.08 |
| Comparative Example 1 | 66.1% | 13.5% | 81.50% | 66.80% | 0 | 30.4 | 1.20 |
| Comparative Example 2 | 62.5% | 15.2% | 80.40% | 65.90% | 0 | 25.1 | 0.40 |
| Comparative Example 3 | 68.5% | 12.2% | 82.40% | 68.20% | 0 | 26.3 | 0.80 |

As can be seen from Table 6, compared with Comparative Examples 1-3, the cycling performance, rate performance and safety performance of the lithium-ion secondary batteries in the examples of the present application are significantly improved.

Obviously, the above examples are merely examples given for clarity of illustration and are not intended to limit the embodiments. For those of ordinary skill in the art, other different forms of changes or variations could have also been made on the basis of the above-mentioned illustrations. There is no need to exhaustively list all embodiments herein, although it cannot be achieved. The obvious changes or variations thus derived are still within the scope of protection of the present application.

## Claims

1. A positive electrode plate, wherein the positive electrode plate comprises a positive electrode current collector and a positive electrode active material layer on at least one side of the positive electrode current collector, the positive electrode active material layer comprises a positive electrode active material and a first binder polymer, the positive electrode active material comprises a matrix and a first coating layer, and the first coating layer is provided on a surface of the matrix in a dot-like coating form;
the matrix comprises lithium cobalt oxide particles, which have cracks on surfaces thereof;
a thickness of the first coating layer is 50 nm-500 nm; the first coating layer comprises one or more of element Ti, Zr, W, Al, La, Y, Mn, Co, Ni, Fe, Sr, Se, Mg, Sc and Ag; and
the first binder polymer comprises a cyano group and an ester group, and a molar ratio of the cyano group to the ester group in the first binder polymer is 1-20 : 1.

2. The positive electrode plate according to claim 1, wherein an X-ray diffraction, XRD, pattern of the first binder polymer exhibits a first characteristic diffraction peak at a 2θ of 16-18° and a second characteristic diffraction peak at a 2θ of 22-30°, a full width at half maximum w1 of the first characteristic diffraction peak is 1.2-3° and a full width at half maximum w2 of the second characteristic diffraction peak is 4.5-6.5°; and the first characteristic diffraction peak and the second characteristic diffraction peak satisfy one or both of the following A and B:
A. a peak intensity F1 of the first characteristic diffraction peak and a peak intensity F2 of the second characteristic diffraction peak satisfy the following relation: 1.3 ≤ F1/F2 ≤ 2.5, preferably 1.4 ≤ F1/F2 ≤ 2.0; and
B. a peak area S1 of the first characteristic diffraction peak and a peak area S2 of the second characteristic diffraction peak satisfy the following relations: 60% ≤ S1/(S1+S2) ≤ 90%, and 10% ≤ S2/(S1+S2) ≤ 40%.

3. The positive electrode plate according to claim 1, wherein a cohesive force of the positive electrode active layer is 10 N/m-30 N/m;
and/or, the positive electrode active material comprises a second coating layer located between the matrix and the first coating layer, wherein the second coating layer has a thickness of 3 nm - 40 nm, and the second coating layer comprises a compound with a spinel structure, which has the following molecular formula: AB₂₋ₘCₘO₄, wherein 0 ≤ m < 0.01, A and B are each independently selected from one or more of Al, Mg, Ti, Co and Ni, and A is different from B, C is selected from one or more of Al, Mg, Ti, W, Nb, Mo, Te and Ce, and a coating area of the first coating layer accounts for 20%-98% of a total coverage area of the second coating layer.

4. The positive electrode plate according to any one of claims 1-3, wherein the first binder polymer satisfies one or both of the following A and B:
A. a glass transition temperature of the first binder polymer is 50°C-100°C, preferably 60°C-90°C; and
B. a swelling rate of the first binder polymer is 50%-300%, preferably 80%-200%.

5. The positive electrode plate according to any one of claims 1-4, wherein the first binder polymer comprises several monomer polymerization units comprising a first monomer and a second monomer,
the first monomer comprises one or more of acrylonitrile, methyl acrylonitrile, ethyl acrylonitrile, propyl acrylonitrile, and methoxy acrylonitrile; and
the second monomer comprises at least one of methyl methacrylate, methyl acrylate, ethyl acrylate, propyl acrylate, butyl acrylate, cyclohexyl acrylate, lauryl acrylate, 2-ethylhexyl acrylate, 2-hydroxyethyl acrylate, 2-hydroxypropyl acrylate, ethyl methacrylate, butyl methacrylate, 2-ethylhexyl methacrylate, isobornyl methacrylate, lauryl methacrylate, 2-hydroxyethyl methacrylate and 2-hydroxypropyl methacrylate.

6. A battery, comprising the positive electrode plate according to any one of claims 1-5, and further comprising a negative electrode plate, an electrolyte and a separator located between the positive electrode plate and the negative electrode plate, wherein the negative electrode plate comprises a negative electrode current collector and a negative electrode active material layer located on at least one side of the negative electrode current collector;
the electrolyte comprises 0.8 mol/L-1.2 mol/L of lithium hexafluorophosphate;
a mass content of fluorine element in a unit area of 1 µm × 1 µm within a cross-section of the positive electrode active material layer along a thickness direction is a, and a mass content of fluorine element in a unit area of 1 µm × 1 µm within a cross-section of the negative electrode active material layer along the thickness direction is b, and a and b satisfy the following relation: |a-b| < 5%;
and/or, the lithium cobalt oxide particles of the positive electrode plate, obtained by disassembly of the battery after 800 cycles of 3C/0.5C charge and discharge at 45°C, have cracks having a depth of 0.5 µm-20 µm and a width of less than or equal to 0.15 µm.

7. The battery according to claim 6, wherein the positive electrode plate comprises a first surface and a second surface arranged opposite to each other; and from a Mth fold at a head of the wound battery, the first surface of the positive electrode plate is provided with several recesses at intervals, M is an integer greater than 2, and the second surface is provided with several protrusions corresponding to the recesses;
optionally, M is 3 or 4;
optionally, a depth of the recess is 1-30 µm;
optionally, a width of the recess is 0.2 mm-8 mm;
and optionally, a spacing between adjacent recesses is 0.5 mm-10 mm.

8. The battery according to claim 6, wherein the negative electrode active material layer comprises a negative electrode active material and a negative electrode binder, and the negative electrode binder comprises a second granular binder and/or a third binder polymer;
the second granular binder comprises one of or a mixture of several of a granular styrene-butadiene rubber, a granular butadiene-nitrile rubber, a granular butadiene rubber, a granular modified styrene-butadiene rubber, granular polyacrylate, granular polyacrylamide, granular polyacrylonitrile, a granular aqueous polyacrylonitrile copolymer and granular polyacrylate;
the negative electrode active material comprises a silicon-based material; and
the third binder polymer comprises a cyano group and an ester group, and the molar ratio of the cyano group to the ester group in the third binder polymer is 1-20 : 1;
optionally, under a field of view of a scanning electron microscope at a magnification of 10,000×, the number of the second binder particles in the negative electrode active material layer is 3 to 300 per unit area of 1 µm × 1 µm.

9. The battery according to claim 6, wherein the separator comprises a base film and a first coating provided on a surface of at least one side of the base film, wherein the first coating comprises ester group-containing polymer particles and fluorine-containing polymer particles;
optionally, the first coating is located between the base film and the positive electrode plate, and an area of the first coating remaining on a surface of the positive electrode plate after disassembly of the battery is 30%-90% of a total area of a side of the positive electrode active material layer; and
optionally, the separator further comprises a second coating, which is located between the base film and the negative electrode plate and comprises ester group-containing polymer particles.

10. The battery according to claim 9, wherein the particle size Dv50 of the ester group-containing polymer particles in the first coating is 0.5 µm-1 µm;
and/or, a particle size Dv50 of secondary particles of the fluorine-containing polymer is 3 µm-18 µm;
and/or, a mass ratio of the fluorine-containing polymer particles to the ester group-containing polymer particles in the first coating is 4-6 : 1;
and/or, a coverage rate of the ester group-containing polymer particles in the first coating on the surface of the base film is W, a coverage rate of the ester group-containing polymer particles in the second coating on the surface of the base film is N, and W and N satisfy the following relation: 0 ≤ N-W ≤ 15%.
